# EUROPÄISCHE PATENTSCHRIFT

(11) **EP 0 265 697 B1**
(45) Veröffentlichungstag und Bekanntmachung des Hinweises auf die Patenterteilung: **07.04.1993**
(21) Anmeldenummer: 87114292.3
(22) Anmeldetag: 30.09.1987
(51) Int. Cl.: G21D 1/00, G21C 13/00

(54) **Bauwerk mit radioaktiven Anlageteilen**
Building containing radioactive components
Bâtiment contenant des composants radioactifs

(30) Priorität: 13.10.1986 DE 3634881
(43) Veröffentlichungstag der Anmeldung: 04.05.1988
(73) Patentinhaber: SIEMENS AKTIENGESELLSCHAFT, 80333 München (DE)
(72) Erfinder: Operschall, Hermann, Dipl.-Ing., D-8560 Lauf (DE)

(56) Entgegenhaltungen:
- DE-A- 3 321 255
- US-A- 3 158 546
- ELECTRICAL WORLD, 15th February 1978, pages 44-48, New York, US; G.D. FRIEDLANDER: "Decommissioning commercial reactors"
- NUCLEAR SAFETY, vol. 20, no. 1, January-February 1979, pages 15-23, Washington, D.C., US; T.S. LaGUARDIA: "Nuclear power-reactor decommissioning"
- Introduction to Nuclear Engineering, 2. Auflage, Addison-Wesley Publishing Company, 1983; Seiten 543-546

## Beschreibung

Die Erfindung bezieht sich auf ein Bauwerk mit radioaktiven Anlageteilen, die innerhalb des Bauwerks von Abschirmeinrichtungen umgeben sind.

Beim Abbau und bei der Zerkleinerung von radioaktiven Anlageteilen kann man die Strahlenbelastung des Personals dadurch möglichst klein halten, daß die Verweilzeiten von Personen gering gehalten werden, daß eine gute Abschirmung gegen Strahlung vorgesehen wird und daß fernbedienbare Maschinen und Geräte eingesetzt werden. Abschirmmaßnahmen unter Verwendung von dicken Abschirmplatten ergeben wegen der schlechten Zugänglichkeit Schwierigkeiten bei Störungen an Zerlegegeräten und beim Herausbringen der radioaktiven Teile. Da ferner keine guten Sichtverhältnisse gegeben sind, ist darüberhinaus die Handhabung der Zerlegewerkzeuge erschwert.

Eine gute natürlich Abschirmung kann auch durch Wasser erzeugt werden. Da aber nach langen Betriebsjahren Risse im Beton des biologischen Schildes möglich sind, kann bei Verwendung von Wasser als Abschirmung eine Verschleppung der Kontamination in das Bauwerk und damit ein stark erhöhter radioaktiver Abfall entstehen.

Aus der Zeitschrift Electrical World, 15.02.1978, Seite 47/48 ist es bekannt, einen Demonstrationsreaktor dadurch abzubauen, daß der Sicherheitsbehälter, der den Reaktorbehälter mit dem Kühlsystem sowie das Becken für abgebrannte und neue Brennelemente umschließt, zur Abschirmung gegen radioaktive Strahlung mit Wasser gefüllt und der Reaktorbehälter in schmale Teilstücke zerkleinert wird. Die Teilstücke werden zunächst durch einen Kran in ein Lagerbecken transportiert und dann einem Endlager zugeführt. Bei Anwendung dieses bekannten Verfahrens ergeben sich große Mengen an radioaktivem Abfall, dessen Endlagerung hohe Kosten verursacht.

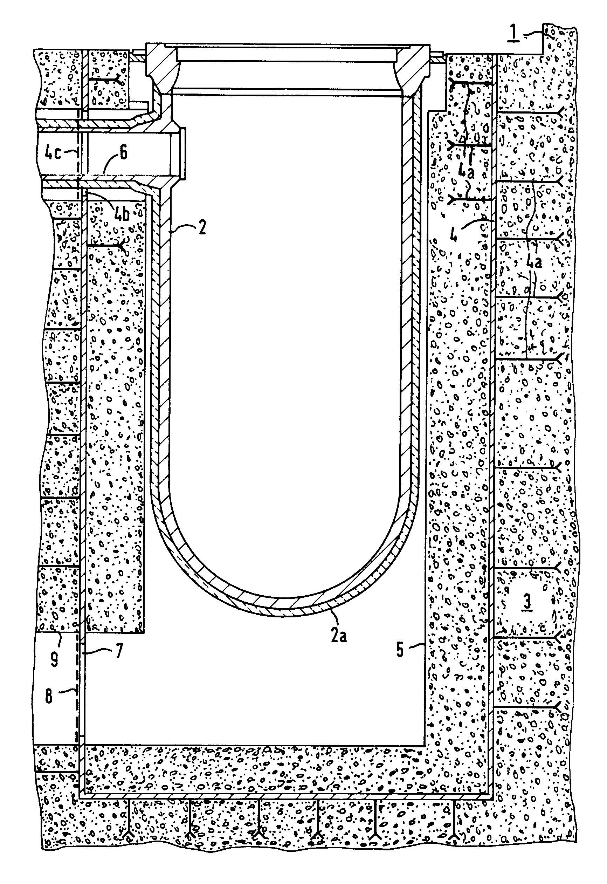

Aus der US-PS 3 158 546 (FIG 1) ist ein Kernkraftwerk mit einem Reaktordruckbehälter bekannt, der in einer Betongrube angeordnet ist, welche innen etwa bis zu zwei Drittel der Höhe des Reaktordruckbehälters mit einem besonderen Behälter ausgekleidet ist. Dieser Behälter reicht nur bis zu einer vorgegebenen Höhe der Betongrube und nicht bis zur Höhe des Reaktordruckbehälters, so daß der Reaktordruckbehälter von außen nicht voll unter Wasser gesetzt werden kann.

Der Erfindung liegt die Aufgabe zugrunde, den radioaktiven Abfall bei der Demontage bzw. Zerkleinerung von radioaktiven Anlageteilen, die durch Neutronenbeschuß aktiviert und/oder kontaminiert sind, bei minimaler Strahlenbelastung des Personals und Gewährleistung guter Sichtverhältnisse sowie einer guten Zugänglichkeit möglichst klein zu halten.

Diese Aufgabe wird erfindungsgemäß durch ein Bauwerk gemäß Anspruch 1 gelöst.

Während der Demontage können die beim Trennvorgang anfallenden Produkte die außerhalb der Umschließung liegenden Teile nicht kontaminieren, so daß der radioaktive Abfall so klein wie möglich gehalten wird.

Dadurch ergibt sich eine weniger aufwendige und kostengünstigere Endlagerung als bei Anwendung des bekannten Verfahrens. Der wasserdichte Behälter kann schon bei der Erstellung des Bauwerkes in die Abschirmeinrichtung eingearbeitet werden, dessen Teile im Laufe des Betriebes durch Neutronenbeschuß aktiviert und durch Verschleppung von Spalt- und Korrosionsprodukten kontaminiert werden.

Im wasserdichten Behälter kann der beim Trennen entstehende Sekundärwaste aufgefangen werden. Der Behälter kann ferner zur Aufnahme des Kühl- und Schmiermittels für die Trenngeräte so wie zur Aufnahme der Trenngeräte selbst dienen. Darüberhinaus kann der Behälter als Pufferlager für Schnitteile und als Umladeort Verwendung finden.

Da in einem Reaktor der biologische Schild zumindest in einem an den Reaktordruckbehälter angrenzenden Teil höher aktiviert bzw. höher kontaminiert sein kann, ist es günstig, den wasserdichten Behälter in den biologischen Schild einzubauen und ihn zusätzlich für die Aufnahme der zerlegten Teile der Reaktordruckbehälter-Einbauten, der Füllkörper, insbesondere des Wärmeschildes und des innerhalb des Behälters angeordneten biologischen Schildes zu bemessen.

Der wasserdichte Behälter weist zweckmäßigeweise an der Außenseite Anker zur Halterung im Beton des biologischen Schildes auf.

Im wasserdichten Behälter für einen Reaktordruckbehälter sind Öffnungen, insbesondere für die Kühlmittelleitungen, vorgesehen, die mit Mitteln zum wasserdichten Verschließen beim später erfolgenden Abbau des Reaktordruckbehälters versehen sind, so daß der Behälter bis zu einer jeweils für die Abschirmung erforderlichen Höhe mit Wasser geflutet werden kann. Dadurch können die stark strahlenden Teile wie der Reaktordruckbehälter, Liner und der innere Teil des biologischen Schildes unter Verwendung von Wasser als Abschirmmittel demontiert werden. Diese Art der Abschirmung ermöglicht eine leichte Zugänglichkeit, gute Lichtverhältnisse und eine gute Handhabung der Schnittstücke. Es ist günstig, den wasserdichten Behälter für die Aufnahme einer Wasserreinigungsanlage auzurüsten. Auf diese Weise werden gute Sichtverhältnisse während der Demontage erzielt.

Nach Beseitigung der Umschließung selbst, kann der äußere Teil des biologischen Schildes bei geringer Strahlenbelastung des Personals trocken abgebaut werden.

Die Erfindung wird anhand der Zeichnung näher erläutert.

In der Figur ist mit 1 ein Teil eines Bauwerkes im Schnitt bezeichnet, in dem radioaktive Anlageteile wie ein Reaktordruckbehälter 2 oder dergleichen untergebracht sind. Diese Anlagenteile sind von Abschirmeinrichtung umgeben. Die Abschirmeinrichtung für den Reaktordruckbehälter 2 besteht aus einem biologischen Schild 3 aus Beton.

Im Bauwerk ist ein das radioaktive Anlageteil nur seitlich und unten umgebender wasserdichter Behälter 4 angeordnet, der beim späteren Abbau des Anlageteiles für die Aufnahme von zur Abschirmung dienenden Wasser und der zerkleinerten kontaminierten Teile des radioaktiven Anlageteils bemessen ist. Da im vorliegenden Fall das radioaktive Anlageteil durch einen Reaktordruckbehälter 2 gebildet wird, ist es günstig, den wasserdichten Behälter 4 nur in dem Teil des biologischen Schildes 3 einzubauen, der die Reaktorgrube 5 bildet. Dabei wird der wasserdichte Behälter nicht nur für die zerkleinerten kontaminierten Teile des Reaktordruckbehälters, sondern auch für die Aufnahme der zerlegten Teile der Reaktordruckbehälter-Einbauten, der Füllkörper, insbesondere des Wärmeschildes 2a, und des Teils des biologischen Schildes bemessen, der innerhalb des Behälters 4 angeordnet ist.

Außen an dem wasserdichten Behälter 4 sind Anker 4a zur Halterung im Beton des biologischen Schilds 3 angeordnet.

Der Behälter 4 besitzt die notwendigen Durchbrüche 4b und 7 für die Kühlmittelzuleitungen 6 und Kühlmittelableitungen bzw. für ein Mannloch 9. Diese Durchbrüche 4b, 7 werden später beim Abbau des Reaktordruckbehälters durch Abdeckungen 4c bzw. 8 verschlossen. Dadurch wird eine wasserdichte Umschließung geschaffen, die bei der Demontage des Reaktordruckbehälters mit Wasser geflutet wird.

Der wasserdichte Behälter 4 ist derart ausgebildet und angeordnet, daß höher aktivierte Teile im Inneren und schwach aktivierte oder inaktive Teile außen liegen. Dadurch können die stark strahlenden Teile wie der Reaktordruckbehälter, Liner und der innere Teil des biologischen Schildes unter Verwendung von Wasser als Abschirmmittel demontiert werden.

## Patentansprüche

1. Bauwerk mit radioaktiven Anlageteilen, die innerhalb des Bauwerks von Abschirmeinrichtungen (3) umgeben sind, und mit einem im Bauwerk (1) angeordneten, die radioaktiven Anlageteile nur seitlich und unten umgebenden wasserdichten Behälter (4), der in der Abschirmeinrichtung (3) derart angeordnet ist, daß höher aktivierte Teile der radioaktiven Anlageteile sowie ein Teil der Abschirmeinrichtung (3) im Inneren und schwach aktivierte oder inaktive Teile außerhalb des Behälters (4) liegen, wobei der wasserdichte Behälter (4) beim späteren Abbau der Anlageteile für die Aufnahme von zur Abschirmung dienenden Wasser und der zerkleinerten kontaminierten Teile der radioaktiven Anlageteile bemessen ist.

2. Bauwerk nach Anspruch 1, **dadurch gekennzeichnet**, daß die radioaktiven Anlageteile einen von einem biologischen Schild (3) umgebenen und in einer Reaktorgrube (5) angeordneten Reaktordruckbehälter (2) umfassen, wobei der wasserdichte Behälter (4) nur in dem Teil des biologischen Schilds (3) eingebaut ist, der die Reaktorgrube (5) bildet und auch für die Aufnahme der zerlegten Teile der Reaktordruckbehälter-Einbauten, der Füllkörper, insbesondere eines den Reaktordruckbehälter (2) umgebenden Wärmeschildes (2a), und des Teils des biologischen Schildes (3) bemessen ist, der innerhalb des Behälters (4) angeordnet ist.

3. Bauwerk nach Anspruch 2, **dadurch gekennzeichnet,** daß an dem wasserdichten Behälter Anker (4a) zur Halterung im Baustoff des biologischen Schildes (3) angeordnet sind.

4. Bauwerk nach einem der Ansprüche 2 oder 3, **dadurch gekennzeichnet**, daß der wasserdichte Behälter (4) Öffnungen (4b), insbesondere für Kühlmittelleitungen (6), aufweist, die mit Mitteln (4c) zum wasserdichten Verschließen beim später erfolgenden Abbau des Reaktordruckbehälters (2) versehen sind.

## Claims

1. Structure having radioactive plant components which are surrounded within the structure by shielding apparatus (3), and having a water-tight container (4) arranged within the structure (1) and surrounding the radioactive plant components at the sides and underneath only, which container (4) is arranged within the shielding apparatus (3) in such a way that more highly activated parts of the radioactive plant components, as well as part of the shielding apparatus (3), are located inside and more weakly activated or inactive parts are located outside the container (4), the water-tight container (4) being sufficiently large to contain water serving for shielding and to contain the crushed contaminated pieces of the radioactive plant components during the subsequent dismantling of the plant components.

2. Structure according to claim 1, characterised in that the radioactive plant components comprise a reactor pressure vessel (2) surrounded by a biological shield (3) and arranged in a reactor pit (5), the water-tight container (4) being built into only the part of the biological shield (3) which forms the reactor pit (5), and is sufficiently large also to contain the dismantled pieces of the reactor pressure vessel fittings, the filling materials, in particular a heat shield (2a) surrounding the reactor pressure vessel (2), and the part of the biological shield (3) which is arranged inside the container (4).

3. Structure according to claim 2, characterised in that anchors (4a) are arranged on the water-tight container for engaging in the construction material of the biological shield (3).

4. Structure according to one of claims 2 or 3, characterised in that the water-tight container (4) has openings (4b), in particular for coolant lines (6), which are provided with means (4c) for water-tight closure during the subsequent dismantling of the reactor pressure vessel (2).

## Revendications

1. Bâtiment comportant des parties radioactives d'installation, qui, à l'intérieur du bâtiment, sont entourées de boucliers (3), et une cuve (4) étanche à l'eau, disposée dans le bâtiment (1), n'entourant les parties radioactives d'installation que latéralement et vers le bas et disposée dans le bouclier (3) de manière que des parties de grande activité des parties radioactives d'installation ainsi qu'une partie du bouclier (3) se trouvent à l'intérieur de la cuve (4) et les parties de faible activité ou inactives à l'extérieur de la cuve (4), la cuve (4) étanche à l'eau étant dimensionnée pour recevoir, lors du démontage ultérieur des parties d'installation, l'eau servant à la protection et les parties contaminées fragmentées des parties radioactives d'installation.

2. Bâtiment suivant la revendication 1, caractérisé en ce que les parties radioactives d'installation comprennent une cuve (2) de réacteur sous pression entourée d'un bouclier (3) biologique et disposée dans une fosse (5) de réacteur, la cuve (4) étanche à l'eau n'étant incorporée qu'à la partie du bouclier (3) biologique, qui forme la fosse (5) du réacteur et étant également dimensionnée pour recevoir les parties démontées des éléments logés dans la cuve de réacteur sous pression, le garnissage, notamment un bouclier (2a) hermétique, entourant la cuve (2) de réacteur sous pression et la partie du bouclier (3) biologique qui se trouve à l'intérieur de la cuve (4).

3. Bâtiment suivant la revendication 2, caractérisé en ce que sur la cuve étanche à l'eau, sont montés des éléments d'ancrage (4a) destinés à maintenir le bouclier (3) biologique dans le matériau de construction.

4. Bâtiment suivant l'une des revendications 2 ou 3, caractérisé en ce que la cuve (4) étanche à l'eau comporte des orifices (4b), notamment pour des conduits (6) d'agent de refroidissement, qui sont munis de moyens (4c) de fermeture étanche à l'eau lors du démontage s'effectuant ultérieurement de la cuve (2) de réacteur sous pression.
